# EUROPEAN PATENT SPECIFICATION

(11) **EP 1 361 712 B1**
(45) Date of publication and mention of the grant of the patent: **29.03.2006**
(21) Application number: 02019550.9
(22) Date of filing: 02.09.2002
(51) Int. Cl.: H04L 12/58, H04Q 7/22

(54) **Method for communicating messages to an electronic communication equipment**
Verfahren zur Nachrichtenübermittlung an eine elektronische Kommunikationseinrichtung
Procédé de communication de messages à un équipment électronique de communication

(30) Priority: 07.05.2002 EP 02010323
(43) Date of publication of application: 12.11.2003
(73) Proprietor: Sony Ericsson Mobile Communications AB, 221 88 Lund (SE)
(72) Inventor: Gajdos, Jan, 211 54 Malmö (SE); Svensson, Magnus, 211 32 Malmö (SE)
(74) Representative: Karlsson, Leif Karl Gunnar

(56) References cited:
- WO-A-01/33782
- WO-A-99/66746
- "Technical Specification Group Terminals; Multimedia Messaging Service (MMS); Functional description; Stage 2 (Release 5)" 3RD GENERATION PARTNERSHIP PROJECT, 1 March 2002 (2002-03-01), XP002240780
- "Wireless Application Protocol; MMS Encapsulation Protocol; Version 05-Jan-2002" WAP FORUM, 5 January 2002 (2002-01-05), XP002240781

## Description

### Field of the Invention

The present invention relates to a method for communicating messages, such as MMS messages, through a server to an electronic communication equipment. More specifically, the present invention relates to a method, according to which spamming effectively may be prevented. Also, the invention relates to an electronic communication equipment and an server adapted to carry out the method according to the invention.

### Background of the Invention

MMS (multimedia messaging service) is a messaging service where a message center relays a message from sending communication equipment to receiving communication equipment, such as a mobile telephone, a communicator, a pager, an electronic organizer or a smart phone. To relay the message, a notification having some "envelope" information, e.g. FROM, TO, SUBJECT, SIZE, and a retrieval address, is transmitted from the message center to the terminal. After receiving the notification, the terminal either automatically or manually fetches the message body from the retrieval address of the notification. The messages comprises a combination of e.g. text, sound, video and images, such as postcards, pictures, screensavers, greeting cards, maps and business card.

MMS has been discussed in the prior art. For example, the technical specification "3GPP TS 23.140 v.5.2.0 (2002-03)", which has been developed within the 3^{rd} Generation Partnership Project, describes a method for relaying a data message from a sending electronic communication equipment to an adressed electronic communication equipment. This document discloses relaying of the adress of an MMS relay/server to a communication equipment. Another prior art document, "MMS Encapsulation Protocol, Version 05 (2002-01)" from the Wireless Application Forum Ltd, describes the wireless application protocol regarding the MMS encapsulation protocol. It discloses that a notification message can be transmitted to a communication equipment to notify that an MMS message is available at an MMS proxy/relay.

The main concern for the MMS application regarding spamming is that some ill-disposed person may create MMS notifications and send these out with own retrieval addresses. When the terminal tries to retrieve the message body it will send a GET request to the retrieval address through an MMS gateway for downloading the, most likely, unwanted MMS message.

Then, it is very much the network configuration that decides what will happen. If the MMS gateway only accepts content location addresses of a specific MMS server, the request will be rejected and the terminal will prompt "failed", i.e. an error message. If the MMS gateway accepts unknown addresses, the message body will be downloaded. However, both of these scenarios are very annoying and could cause costs for the user of the receiving communication equipment, such as connection costs and/or downloading costs. Also, every unwanted connection to a gateway for downloading an unwanted message will cause the equipment to consume more power, and occupy unnecessary network capacity.

One solution for trying to avoid spamming is to only accept notifications from sources, such as PPGs (push proxy gateways), or apparatuses trusted by the terminal. However, this solution for avoiding spamming needs different software for different communication network operators. Also, in every user equipment there has to be stored a list comprising the trusted sources, which has to be updated when any previously trusted source on the list no longer is trusted or a new trusted source is added. This is very expensive and inefficient. Also, such lists are not very secure and are easy to get around, if the updating procedure of the list or any trusted source may become known.

The spamming scenario is not solved in the known prior art of MMS. However, as MMS is a push service it is essential to protect the user from spamming, which may be a serious problem.

### Summary of the invention

Therefore, it is an object of the invention to provide an effective method for protecting a user of an electronic communication equipment from spamming. More specifically, the object of the invention is to provide a method for communicating messages, which is simple to implement and which does not require any advanced management of relationships between said equipment and components of a communication system or any other trusted source.

By may of introduction, data messages are relayed from a sending electronic communication equipment to an addressed electronic communication equipment. A message center stores an incoming message body at a content location address, such as the URL of the message center. Furthermore, a message notification comprising a message center identifier is transmitted from the message center to the addressed communication equipment to alert that a message body is stored at the message center. The message body is transmitted from the message center to the addressed communication equipment upon receiving a GET request from the addressed equipment.

The above mentioned object is achieved by a method for receiving a data message at an electronic communication equipment. According to this method, the electronic communication equipment receives a message notification comprising a message center identifier. for indentifying a message center that transmitted the notification. The received message center identifier is compared with a message center identifier stored in the communication equipment. A message body corresponding to the notification is downloaded only if said stored and received message center identifiers match.

The message center is capable of relaying an incoming message to an addressed electronic communication equipment. Further, the message center protects the user of the addressed communication equipment from spamming and it is easy to implement and maintain.

Moreover, the message center is adapted to store the incoming message at a content location address. Further, the message center is adapted to incorporate a message center identifier identifying the message center into a message notification, and transmit the message body to the communication equipment upon receiving a GET request from said equipment.

It is a further of the invention to provide an electronic communication equipment adapted to determine weather a message notification has been executed by a known message center. Also, it is an object of the invention to only accept/download messages from an identified message center. Finally, it is an object to provide an communication equipment, whereby a user of said equipment is protected from spamming .

According to the invention, including a filter implemented through a processing means, in an electronic communication equipment capable of providing data message services, such as MMS services, achieves the above objects. By utilizing the filter, only messages located at a content location, such as an MMSC (MMS center), which may be identified by the electronic communication equipment, will be downloaded. All control messages (e.g. acknowledgement, reject, etc.) and originate data messages are sent from the message center to a specific content location address, such as an URL, that are predefined and stored in the communication equipment. The communication equipment is adapted to check if the data message corresponding to the notification is stored at specific content location address. Comparing of the message center identifier of the notification message and a known message center identifier stored in the communication equipment provides the filtering.

An advantage of the invention is that any advanced relationship between electronic communication equipment and push proxys does not have to be managed for the spamming protection. Also, the solution according to the invention is secure in that no trusted push proxys are utilized, which may be easy to go around using a PC program and a mobile telephone.

Further preferred features of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief description of the drawings

Preferred and alternative embodiments of the invention will now be disclosed in more detail with reference to the accompanying drawings, in which:
Fig. 1A illustrates a mobile telephone connectable to a message center through a mobile communication network;
Fig. 1B, illustrates the essential features of the communication equipment for carrying out the method depicted in Fig. 5;
Fig. 2 is a block diagram of some of the components of the message center of Fig. 1A embodied as an MMSC;
Fig. 3 is a block diagram of some of the components of the mobile communication network utilized according to one embodiment of the invention;
Fig. 4 is a flowchart of the method for relaying data messages at the message center; and
Fig. 5 is a flowchart of the method for receiving messages at the communication equipment.

### Detailed Disclosure of Embodiments

The present invention provides a method for communicating data messages, such as MMS messages, to an electronic communication equipment. Examples of an electronic communication equipment is a mobile terminal, a mobile telephone, a pager, or a communicator, i.e. a smartphone, an electronic organizer or the like.

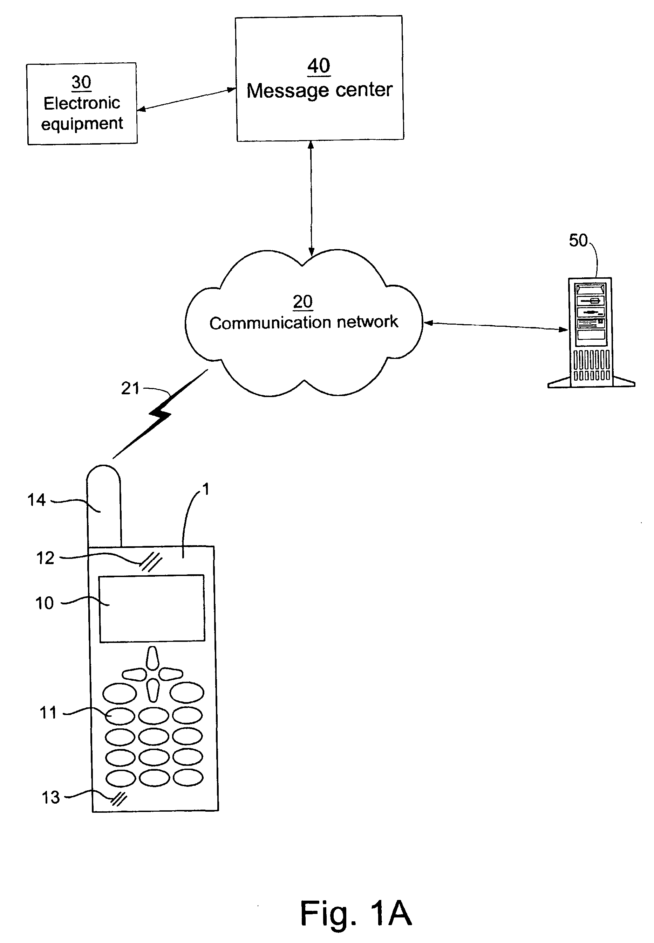

In Fig. 1A is an addressed electronic communication equipment exemplified as a mobile telephone 1. For convenience, reference will be made to a mobile telephone 1 in the following. However, this should not be taken as limiting the scope of the invention, which is best defined by the enclosed independent claims.

The mobile telephone 1 comprises in a common fashion a user interface comprising a display 10, a keypad 11, a loudspeaker 12, and a microphone 13, through which a user may operate and interact with the mobile phone 1. Further, the mobile telephone 1 comprises an antenna 14 for communicating speech and data with a communication network 20 through a wireless connection 21.

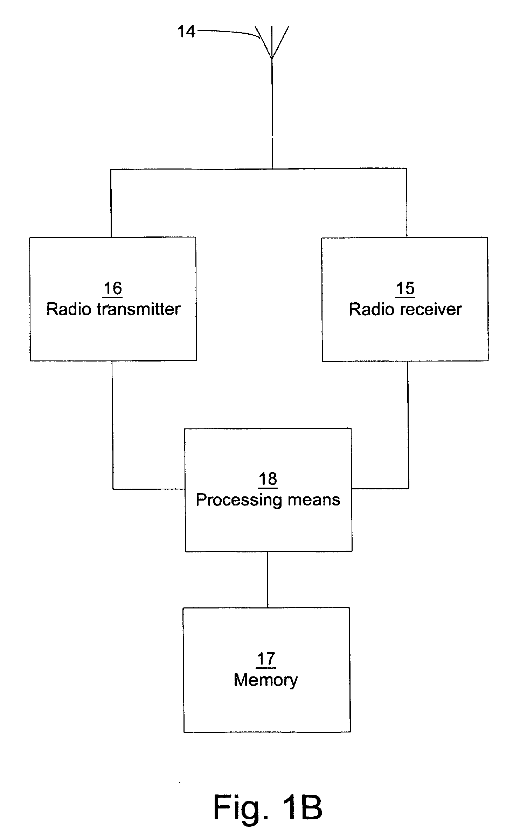

As shown in Fig. 1B, the mobile telephone 1 according to Fig. 1A comprises a radio receiver 15 and a radio transmitter 16, which are adapted to communicate data messages, such as MMS (multimedia messaging service) messages, a memory 17, and a processing means 18, as will be further disclosed below. Also, the mobile telephone 1 comprises signal processing means for processing a received signal and/or a signal to be transmitted, e.g. an A/D converter and a D/A converter, as is generally known in the art and will therefore not be further disclosed herein.

Referring again to Fig. 1A, at least a second electronic communication equipment 30, e.g. a server, a mobile terminal, a mobile telephone, or a smartphone is connected is connected to a message center 40, which is adapted to relay messages from, through the mobile communication network 20 to the shown mobile telephone 1.

A server 50 for storing messages may be connected directly to the mobile communication network 20, for direct access by the mobile telephone 1.

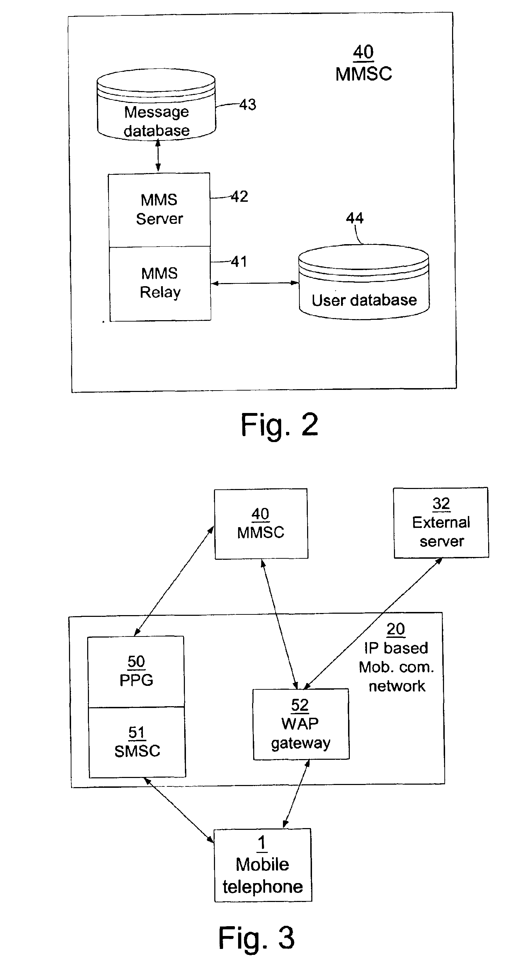

In Fig. 2 is one embodiment of the message center disclosed as an MMSC 40 (MMS center). The MMSC comprises a MMS relay 41 for relaying messages from the second electronic communication equipment 30 to the mobile telephone 1. Incoming messages are routed to a MMS server 42, which stores the messages on a message database 43. As is understood, the MMSC 40 may comprise several MMS servers 41 and message databases 43 depending on the actual application. Alternatively, only external servers, such as the server 50, connected directly to the mobile communication network may be employed.

User profiles may be stored on a user database 44 of the MMSC. The user profile is user defined and is managed via the Internet and may determine which messages are notified immediately to the user of the addressed mobile telephone 1 and which are notified with a delay. Also, the user profile may comprise filtering rules and routing tables, as is known in the art.

MMS services can be offered on any IP based air interface such as GPRS (general packet radio service), EDGE (Enhanced Data Rates for Global Evolution) or UMTS (universal mobile telecommunications system) network. The MMS architecture encompass many different network types, which can be connected by standard Ip (Internet Protocol) messaging formats, such as SMTP (simple mail transport protocol), MIME (Multipurpose Internet Mail Extension), ets. This allows messaging in 2G and 3G mobile networks to be compatible with Internet messaging services. As should be noticed, MMS messages require an IP based communication network to be communicated. Therefore, the communication network 20 is IP based in the embodiment of spamming protection of MMS messages.

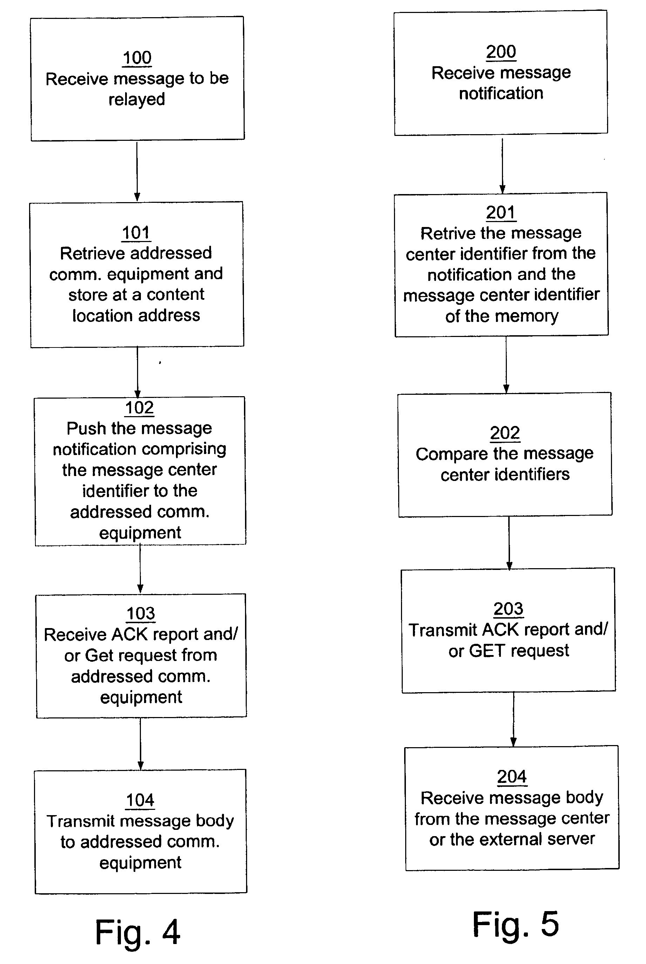

One approach to communicate messages to the mobile telephone 1 from the message center 40 is shown in Fig. 3, and explained in the following with reference to Fig. 4 and 5. According to the invention, the mobile telephone 1 comprises a filtering means, which is adapted to identify weather a message corresponding to a notification is notified by a known message center. If so, the message body will be downloaded to the mobile telephone 1. This will ensure that the incoming notification is from a known and approved MMSC 40, and thus all other messages can be avoided, i.e. spamming protection is provided.

An incoming MMS message from another electronic communication equipment addressed to a specific mobile telephone 1 is at a first step 100 of Fig. 4 received at the MMSC 40 by the MMS relay 41. Then, in step 101 the MMS relay 41 will retrieve the sender and the receiver of the message and derive the user profile of the receiver of the MMS message from the user database 44. The identity of the receiver and the sender may be provided by the IP address of each electronic communication equipment. However, other identifications are equally well possible for identifying the sender and the receiver. Also, the MMS relay will transmit the message to the MMS server 42 for temporarily storing the message in the message database 43. The MMS server will have a at least one message center identifier identifying the message center. According to the invention, the message center identifier can be provided by a content location address, such as an URL (universal resource locator), which is known and accepted by the mobile telephone 1, as will be explained in the following.

A message center identifier, such as a URL(s) known by and stored in the mobile telephone 1 has according to the invention a specific structure, e.g. according to the following:

http://mms32.whazzup.com/A1B2C3D4E5/, wherein the initial portion, mms32.whazzup.com, is the message center identifier identifying the server 50, 42 adapted to store the message body. The second portion of the known URL, A1B2C3D4E5, is a terminal identification code, such as a random generated string, which is unique for each particular MSISDN (mobile station ISDN number), such as the mobile telephone 1. Said code makes it hard for a potential MMS-notification-spammer to figure out which content location address a specific mobile telephone 1 is expecting. As should be noted, the above acceptable URL is only exemplary and may have many different structures, without limiting the scope of the invention. Also, the identification code according to above is not necessary, but will increase the security of the spamming protection of the user of the mobile telephone 1. Also, as realized by the man skilled in the art there are other solutions to provide said identification code.

The MMSC 40 ensures that the message center identifier is incorporated into the notification to the mobile terminal 1. Therefore, in one embodiment of the invention the URL of the content location address of the stored message has a structure corresponding to the URL(s) stored in the mobile telephone 1, e.g.: http://mms32.whazzup.com/AlB2C3D4ES/YURACBD98127644; http://mms32.whazzup.com/AIB2C3D4E5/XYZACDB98127467; and/or http://mms32.whazzup.com/AlB2C3D4E5/A764CBD98127634.

The last portion of the above URLs, e.g. YURACBD98127644, is a message identification code for the temporarily stored message. Consequently, the message center identifier is incorporated into the content location address. However, as is realized by the man skilled in the art, the message identifier does not have to be a part of the content location address, as long as the mobile telephone 1 can identify the message center 40 sending the notification, by e.g. a separate message center identifier, which is sent together with the content location address, known by the mobile telephone 1.

To notify the mobile telephone 1 that a message is received by the MMSC 40, the notification is at step 102 pushed from the MMS relay 41 to the mobile telephone 1 by utilizing e.g. WAP push. WAP push is used such that concatenated SMS messages are used to transport the notification data comprising some "envelope" information, such as sender, size, retrieval URL, message center identifier etc.

In another embodiment, SMS notification is not necessary. Instead, a pure HTTP (Hyper text transfer protocol) payload between the MMSC 40 and the mobile telephone 1 may be utilized.

In the embodiment shown in Fig. 3 the notification is transmitted through a PPG 50 (push proxy gateway), which will ensure that the notification is delivered to the correct mobile telephone 1. Also, an SMSC 51 (SMS center) is utilized for only transmitting the notification when the mobile telephone is switched on, which the SMSC 51 keeps track on. If the mobile telephone 1 is not switched on the notification will be stored at the SMSC 51 until said phone 1 is switched on again.

When the mobile telephone 1 receives the notification, the notification will be handled according to the method illustrated in Fig. 5. In a first step 200, the message notification is received. Then, in step 201 the message identifier, such as the content location address of the notification, is retrieved and run through the filtering means, which is adapted to compare the at least one known message identifier, e.g. the URL of the message center, stored in the memory 17 of said mobile telephone 1 with the message center identifier of the notification. The filtering means is implemented through the processing means 18, which is adapted to derive the message center identifier of the notification and the message center identifier of the memory (17) and, in step 203, compare the message center identifiers to see if they match. If said identifiers do not match, e.g. according to the examples above, the mobile telephone 1 may according to one embodiment transmit an NACK (not acknowledge) report to the sending MMSC, through a WAP gateway 52. However, as the sending MMSC in this case is not approved, transmitting a NACK report to said MMSC is not necessary and the notification can be canceled without further processing. If a NACK report is sent, the MMSC will delete the MMS message from the message database.

If the filtering of the message center identifier of the notification is successful, the mobile telephone 1 will in step 203 transmit an ACK (acknowledge) report to the MMSC 40, through the WAP gateway 42. The MMSC 40 will then store the MMS message until the mobile telephone 1 downloads it.

Alternatively, if the user of the mobile telephone 1 decides to not download the message body, a reject command will be executed, e.g. through the man-machine interface, and transmitted to the MMSC 40, which will delete the message.

The mobile telephone 1 is further adapted to only alert the user of said phone 1 if the message center identifiers match according to the above. Then, the user may decide when or if to download the message body.

When the user of the mobile telephone 1 decides to download the MMS message, a GET instruction is executed in step 203 automatically or through the man-machine interface depending on user preferences. If the GET request is executed automatically, said request will replace the ACK report according to the above, which in this case is unnecessary. When the MMSC 40 receives the GET request in step 103 of Fig 4, the MMSC 40 transmits the MMS message body stored at the message database 43 to the mobile telephone 1, through the WAP gateway 52. Finally, the mobile telephone 1 will receive the message body in step 204 of Fig. 5. As is realized by the man skilled in the art, any IP communication network can be utilized for transmitting the notification, ACK/NACK report, reject command, and MMS message to/from the mobile telephone 1.

Alternatively, if the message body is stored at the external server 50, the GET request is relayed to said server 50, which will transmit the message body to the mobile telephone 1.

If an operator wishes to balance the load of MMS messages over any number of MMSCs, then the subscriber may only be provided with the correct URL for his particular MMSC. As is understood, the operator may provide URLs, which may be the same or different for different subscribers.

The invention has been described above with reference to an exemplifying embodiment. However, the method according to the invention is not limited to merely MMS messages, as indicated above. Other messages, such as tickers (text scrolling horizontally on a display) which is sent through the communication network 20 to an electronic communication equipment comprising a display, which presents said ticker, may be relayed through other message centers 40. Therefore, other embodiments than the ones referred to above are equally possible within the scope of the invention, which is best defined by the appended independent claims.

## Claims

1. A method for receiving data messages at an electronic communication equipment (1) through a communication network (20), comprising
receiving a message notification comprising a message center identifier for identifying a message center (40) that transmitted the notification, and **characterized by** the steps of:
comparing the received message center identifier with at least one known message center identifier stored in the electronic communication equipment (1); and
canceling said notification if said received message center identifier does not match any stored message center identifier.

2. The method according to claim 1, wherein the notification comprises a content location address comprising the message center identifier, which is a URL of a message center (40) or an external server (50).

3. The method according to claim 1 or 2, wherein the notification comprises a content location address comprising a terminal identification code identifying the electronic communication equipment (1).

4. The method according to any of the claims 1-3, wherein the terminal identification code is a random generated string.

5. The method according to any of the claims 1-4, wherein an ACK report is transmitted to the message center (40) if the received and the stored message center identifiers match.

6. The method according to any of the claims 1-5, further comprising transmitting a GET request to download the data message to the electronic communication equipment (1) .

7. The method according to any of the claims 1-6, wherein the data message is an MMS message, and the message center is an MMSC (40)

8. An electronic communication equipment (1) comprising a receiver (15) and a transmitter (16) for communicating messages through a communication network (20), a memory (17), and a processing means (18), the receiver (15) being adapted to receive a message notification, **characterized in that** the
processing means (18) is adapted to compare a message center identifier comprised in the notification, for identifying a message center (40) that transmitted the notification with at least one known message center identifier stored in the memory (17); and
cancel said notification if said received message center identifier does not match any stored message center identifier.

9. The electronic communication equipment according to claim 8, wherein said processing means (18) is further adapted to derive a terminal identification code from a content location address comprised in the notification.

10. The electronic communication equipment according to claim 8 or 9, wherein said transmitter (16) is adapted to transmit an ACK report to a message center (40) if the received message center identifier and the at least one stored message center identifier match.

11. The electronic communication equipment according to any of the claims 8-10, wherein said transmitter (16) is further adapted to transmit a GET request to download the message.

12. The electronic communication equipment according to any of the claims 8-11, wherein the receiver (15) is adapted to receive MMS messages.

13. The electronic communication equipment according to any of the claims 8-12, wherein the equipment is a mobile telephone (1), a mobile terminal, a communicator, or an electronic organizer.

## Patentansprüche

1. Ein Verfahren zum Empfangen von Datennachrichten bei einer elektronischen Kommunikationseinrichtung (1) durch ein Kommunikationsnetzwerk (20) umfassend:
Empfangen einer Nachrichten-Meldung mit einem Nachrichten-Zentrum-Identifizierer zum Identifizieren eines Nachrichten-Zentrums (40), das die Meldung gesendet hat, **gekennzeichnet durch** die folgenden Schritte:
Vergleichen des empfangenen Nachrichten-Zentrum-Identifizierers mit mindestens einem in der elektronischen Kommunikationseinrichtung (1) gespeicherten Nachrichten-Zentrum-Identifizierer; und
Annullieren der Meldung, wenn der empfangene Nachrichten-Zentrum-Identifizierer nicht mit irgendeinem gespeicherten Nachrichten-Zentrum-Identifizierer übereinstimmt.

2. Das Verfahren gemäß Anspruch 1, wobei die Meldung eine Inhaltsortsadresse mit dem Nachrichten-Zentrum-Identifizierer umfasst, die eine URL des Nachrichten-Zentrums (40) oder eines externen Servers (50) ist.

3. Das Verfahren gemäß Anspruch 1 oder 2, wobei die Meldung eine Inhaltsortsadresse mit einem Endgerät-Identifizierungscode umfasst, der die elektronische Kommunikationseinrichtung (1) identifiziert.

4. Das Verfahren gemäß einem der Ansprüche 1 bis 3, wobei der Endgerät-Identifizierungscode eine zufällige generierte Kette ist.

5. Das Verfahren gemäß einem der Ansprüche 1 bis 4, wobei ein ACK-Bericht zu dem Nachrichten-Zentrum (40) gesendet wird, wenn die empfangenen und die gespeicherten Nachrichten-Zentrum-Identifizierer übereinstimmen.

6. Das Verfahren gemäß einem der Ansprüche 1 bis 5, ferner ein Senden einer GET-Anforderung zum Herunterladen der Datennachricht zur elektronischen Kommunikationseinrichtung (1) umfassend.

7. Das Verfahren gemäß einem der Ansprüche 1 bis 6, wobei die Datennachricht eine MMS-Nachricht ist, und das Nachrichten-Zentrum ein MMSC (40) ist.

8. Eine elektronische Kommunikationseinrichtung (1) mit einem Empfänger (15) und einem Sender (16) zum Kommunizieren von Nachrichten durch ein Kommunikationsnetzwerk (20), einem Speicher (17) und Verarbeitungsmitteln (18), wobei der Empfänger (15) zum Empfangen einer Nachrichten-Meldung angepasst ist, **gekennzeichnet dadurch, dass** die Verarbeitungsmittel (18) angepasst sind zum Vergleichen eines in der Meldung enthaltenen Nachrichten-Zentrum-Identifizierers zum Identifizieren eines Nachrichten-Zentrums (40), das die Meldung sendete, mit mindestens einem bekannten, in dem Speicher (17) gespeicherten Nachrichten-Zentrum-Identifizierer; und
Annullieren der Meldung, wenn der empfangene Nachrichten-Zentrum-Identifizierer nicht mit irgendeinem gespeicherten Nachrichten-Zentrum-Identifizierer übereinstimmt.

9. Die elektronische Kommunikationseinrichtung gemäß Anspruch 8, wobei die Verarbeitungsmittel (18) ferner zum Ableiten eines Endgerät-Identifizierungscodes von einer in der Meldung enthaltenen Inhaltsortsadresse angepasst sind.

10. Die elektronische Kommunikationseinrichtung gemäß Anspruch 8 oder 9, wobei der Sender (16) angepasst ist zum Senden eines ACK-Berichts zu einem Nachrichten-Zentrum (40), wenn der empfangene Nachrichten-Zentrum-Identifizierer und der mindestens eine gespeicherte Nachrichten-Zentrum-Identifizierer übereinstimmen.

11. Die elektronische Kommunikationseinrichtung gemäß einem der Ansprüche 8 bis 10, wobei der Sender (16) ferner zum Senden einer GET-Anforderung zum Herunterladen der Nachricht angepasst ist.

12. Die elektronische Kommunikationseinrichtung gemäß einem der Ansprüche 8 bis 11, wobei der Empfänger (15) zum Empfangen von MMS-Nachrichten angepasst ist.

13. Die elektronische Kommunikationseinrichtung gemäß einem der Ansprüche 8 bis 12, wobei die Einrichtung ein Mobiltelefon (1), ein mobiles Endgerät, ein Fernmelder (communicator), oder ein elektronischer Organizer ist.

## Revendications

1. Procédé pour recevoir des messages de données sur un équipement de communication électronique (1) par l'intermédiaire d'un réseau de communication (20), comprenant :
la réception d'une notification de message comprenant un identificateur de centre de messagerie pour identifier un centre de messagerie (40) qui a transmis la notification, et **caractérisé par** les étapes qui consistent à :
comparer l'identificateur du centre de messagerie reçu à au moins un identificateur de centre de messagerie connu stocké dans l'équipement de communication électronique (1) ; et
annuler ladite notification si ledit identificateur de centre de messagerie reçu ne concorde pas avec un identificateur de centre de messagerie stocké quelconque.

2. Procédé selon la revendication 1, dans lequel la notification comprend une adresse d'emplacement de contenu comprenant l'identificateur du centre de messagerie qui est une adresse URL d'un centre de messagerie (40) ou d'un serveur externe (40).

3. Procédé selon la revendication 1 ou 2, dans lequel la notification comprend l'adresse d'un emplacement de contenu comprenant un code d'identification de terminal identifiant l'équipement de communication électronique (1).

4. Procédé selon l'une quelconque des revendications 1 à 3, dans lequel le code d'identification de terminal est une chaîne générée aléatoire.

5. Procédé selon l'une quelconque des revendications 1 à 4, dans lequel un rapport ACK (accusé de réception) est transmis au centre de messagerie (40) si les identificateurs de centres de messagerie reçus et stockés concordent.

6. Procédé selon l'une quelconque des revendications 1 à 5, comprenant en outre la transmission d'une demande GET (obtenir) pour télécharger le message de données vers l'équipement de communication électronique (1).

7. Procédé selon l'une quelconque des revendications 1 à 6, dans' lequel le message de données est un message MMS, et le centre de messagerie est un centre MMSC (40).

8. Équipement de communication électronique (1) comprenant un récepteur (15) et un émetteur (16) pour communiquer des messages par l'intermédiaire d'un réseau de communication (20), une mémoire (17) et un moyen de traitement (18), le récepteur (15) étant rendu apte à recevoir une notification de message, **caractérisé en ce que**
le moyen de traitement (18) est rendu apte à comparer un identificateur de centre de messagerie présent dans la notification, pour identifier un centre de messagerie (40) qui a transmis la notification, à au moins un identificateur de centre de messagerie connu stocké dans la mémoire (17) ; et
à annuler ladite notification si ledit identificateur de centre de messagerie reçu ne concorde pas avec un identificateur de centre de messagerie stocké quelconque.

9. Équipement de communication électronique selon la revendication 8, dans lequel ledit moyen de traitement (18) est en outre rendu apte à déterminer un code d'identification de terminal à partir d'une adresse d'emplacement de contenu présente dans la notification.

10. Équipement de communication électronique selon la revendication 8 ou 9, dans lequel l'émetteur (16) est rendu apte à transmettre un rapport ACK à un centre de messagerie (40) si l'identificateur de centre de messagerie reçu et si ledit au moins un identificateur de centre de messagerie stocké concordent.

11. Équipement de communication électronique selon l'une quelconque des revendications 8 à 10, dans lequel ledit émetteur (16) est en outre rendu apte à transmettre une demande GET pour télécharger le message.

12. Équipement de communication électronique selon l'une quelconque des revendications 8 à 11, dans lequel le récepteur (15) est rendu apte à recevoir des messages MMS.

13. Équipement de communication électronique selon l'une quelconque des revendications 8 à 12, dans lequel l'équipement est un téléphone mobile (1), un terminal mobile, un communicateur ou un organiseur électronique.
